# FASCICULE DE BREVET EUROPEEN

(11) **EP 0 396 443 B1**
(45) Date de publication et mention de la délivrance du brevet: **01.12.1993**
(21) Numéro de dépôt: 90401030.3
(22) Date de dépôt: 13.04.1990
(51) Int. Cl.: B60M 1/20, H01B 17/52

(54) **Dispositif de déviation vers au moins un point d'égouttement d'un liquide s'écoulant sur un élément longiligne**
Ablenkungsvorrichtung einer Flüssigkeit auf einem länglichen Element nach mindestens einem Tropfpunkt
Deviating device towards at least a dripping point of a liquid on a longitudinal element

(30) Priorité: 26.04.1989 FR 8905940
(43) Date de publication de la demande: 07.11.1990
(73) Titulaire: LABORATOIRE D'ETUDES ET DE RECHERCHES CHIMIQUES L.E.R.C. S.A., 59230 St. Amand les Eaux (FR)
(72) Inventeur: Bertin, Philippe, F-59235 Bersee France (FR)
(74) Mandataire: Ecrepont, Robert

(56) Documents cités:
- FR-A- 1 239 345
- FR-A- 2 307 352
- Dictionnaire "Le Petit Robert", 1988, page 1831

## Description

L'invention se rapporte à un dispositif de déviation vers au moins un point d'égouttement d'un liquide comportant les caractéristiques définies au préambule de la revendication 1.

L'invention se rapporte plus particulièrement mais non exclusivement à un dispositif de déviation de l'écoulement d'eau sur au moins l'un des éléments d'une structure aérienne destinée à supporter au moins une ligne d'alimentation électrique telle une ligne d'alimentation de véhicules à traction électrique comme les trolley-bus.

De telles structures aériennes, reliées à un support d'appui au sol tel un poteau, un mur ..., servent à présenter les cables d'alimentation des véhicules au dessus de leur voie de circulation qui se situe à une certaine distance de l'aplomb du dit support.

En raison au moins en partie du porte à faux qui en résulte, ces structures sont généralement constituées au moins en partie d'éléments rigides reliés entre eux et avec le support essentiellement dans au moins un plan globalement vertical pour former une structure triangulée.

Classiquement, les parties essentielles de cette structure sont en matériau électriquement isolant, par exemple, en résine armée de fibres de verre.

Malgré leur propriété d'isolation, ces parties essentielles sont généralement reliées au support et/ou à la ligne électrique par des organes isolateurs.

Toutefois, notamment pour leur assemblage entre elles, ces parties essentielles mettent généralement en oeuvre un certain nombre d'organes métalliques, tels des boulons, des manchons d'interconnexion..

Lorsque ces organes d'assemblage ne sont pas en matériau métallique inoxydable, ce qui, ces matériaux étant très onéreux, est fréquent, on déplore que l'eau issue de précipitations ou de brouillards, à fortiori de brouillards salins, induise notamment par ruissellement au long des éléments longilignes non horizontaux la migration de particules métalliques notamment d'ions métalliques.

Ces ions métalliques finissent par se fixer et constituer, au long des organes sur lesquels ils migrent, un chemin conducteur de l'électricité.

Avec le temps, ces migrations parviennent à franchir les organes isolateurs interposés entre la structure et son support et/ou ceux interposés entre les lignes électriques et la structure et à autoriser des courants de fuite.

Ces courants de fuite sont évidemment préjudiciables pour la sécurité des personnes et pour l'installation.

Pour remédiera à la migration des ions métalliques sur les lignes existantes, il est connu de démonter les éléments longilignes au long desquels se produit la migration et d'emboiter sur ces derniers au moins un dispositif de déviation directement vers le sol de l'écoulement de la migration.

Ces dispositifs de déviation, comme leur nom l'indique, dévient le ruissellement vers au moins un point dit d'égouttement au niveau duquel s'effectue donc la formation de gouttes qui se détachent par gravité et tombent par exemple sur le sol.

De tels dispositifs donnent de très bons résultats mais on leur reproche d'exiger le démontage des structures ce qui implique la mise hors service des lignes correspondantes et donc l'interruption du service assuré par les véhicules alimentés par ces lignes.

Dans un domaine différent à savoir celui des isolateurs, on connaît également un dispositif (FR-A-2.307.352) conçu pour améliorer les caractéristiques de ces isolateurs à cloche et qui est constitué par un disque mince rapporté sur chacune des nervures de l'isolateur quant à lui monobloc et seul ce disque est pourvu d'une découpe centrale et d'une fente qui s'étend depuis la découpe centrale jusqu'au bord externe du disque.

Dans une forme préférée de réalisation, cette découpe centrale présente des pattes orientées radialement vers le centre du disque de manière à ne créer qu'un appui ponctuel du disque sur la portée complémentaire de l'isolateur.

Dans cette solution, si la faible épaisseur du disque permet de placer le disque sur l'isolateur en décalant les deux bords de la fente dans un plan sensiblement perpendiculaire au plan du disque, cet appui ponctuel et cette faible épaisseur ne peuvent ensuite assurer une étanchéité suffisante entre la portée interne de la découpe et l'isolateur.

Un résultat que l'invention vise à obtenir est un dispositif de déviation du type précité qui puisse être mis en place sans exiger le démontage des éléments des structures considérées.

A cet effet, l'invention a pour object un dispositif de déviation vers au moins un point d'égouttement d'un liquide qui comporte les caractéristiques définies à la partie caractérisante de la revendication 1.

L'invention sera bien comprise à l'aide de la description ci-après faite à titre d'exemple non limitatif en regard du dessin ci-annexé qui représente schématiquement :

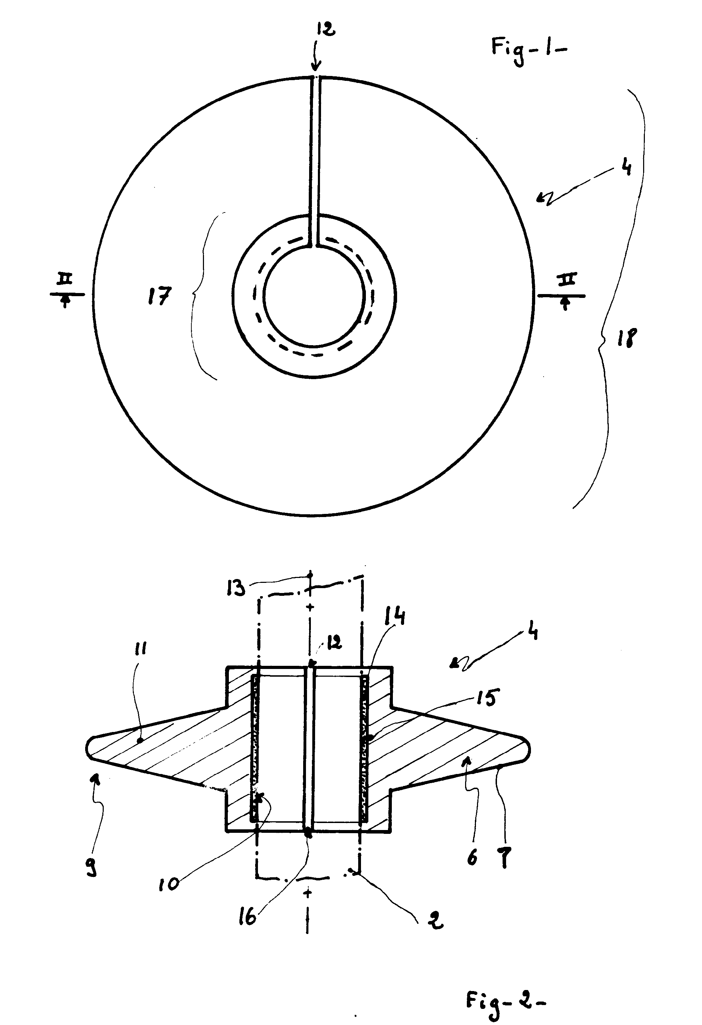

- figure 1 : une vue de face du dispositif,
- figure 2 : une coupe selon II-II de la figure 1,

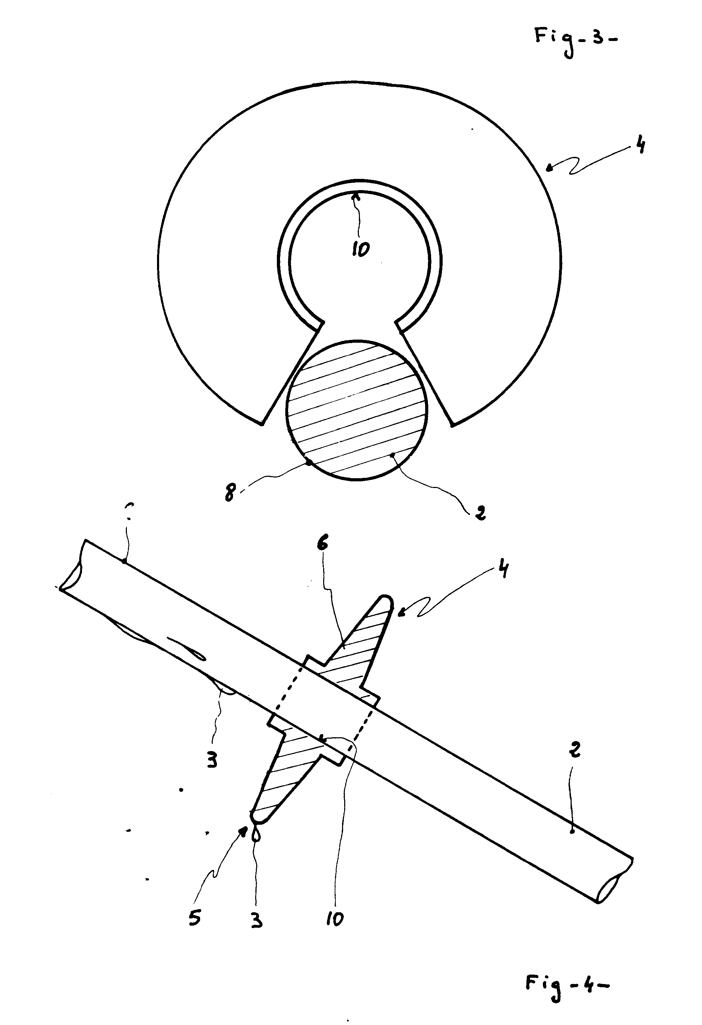

- figure 3 : le dispositif en cours de montage sur un élément récepteur,
- figure 4 : vu latéralement et en coupe, le dispositif en cours de fonctionnement,

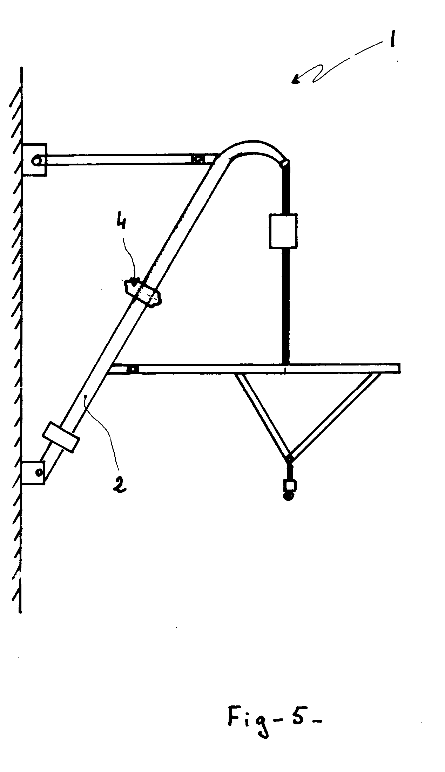

- figure 5 : une structure équipée du dispositif selon l'invention.

En se reportant au dessin, on voit une structure 1 qui comprend un certain nombre d'éléments 2 dont au moins un élément longiligne notamment incliné dans un plan sensiblement vertical et au long duquel se produit un écoulement superficiel liquide 3 tel un ruissellement d'eau induit par les précipitations ou la condensation d'un brouillard (non représenté).

Tel que cela apparaît également au dessin, au moins l'élément considéré c'est à dire celui au niveau duquel se produit l'écoulement, est équipe d'au moins un dispositif de déviation 4 de l'écoulement vers au moins un point d'égouttement 5.

Classiquement, ce dispositif de déviation 4 comprend :
- d'une part, au moins un moyen de déviation de l'écoulement, c'est à dire essentiellement une paroi 6 dont, lorsque le dispositif se trouve monté sur un élément 2, au moins une surface 7 dite déviatrice borde par une liaison étanche la face externe 8 du dit élément et s'étend jusqu'à un bord externe 9 de la paroi 6 qui est éloigné de la face externe 8 de l'élément de manière à produire la concentration et l'égouttement du liquide et,
- d'autre part, au moins un moyen 10 de fixation de la dite paroi 6 sur l'élément longiligne qui consiste principalement en une portée globalement cylindrique 10 dont la section transversale est de forme complémentaire à celle de la face 8 externe de l'élément longiligne et qui est ménagé dans la paroi 6 qui porte la surface déviatrice 7.

De manière connue, la paroi 6 qui porte la surface déviatrice 7 et la dite portée 10 du moyen de fixation, présente une solution de continuité 12 (dans le sens de "interruption de la continuité", voir dictionnaire "Le Petit Robert", 1988, page 1831) qui s'étend de- puit la dite portée 10 du moyen de fixation sur la face externe 8 de l'élément jusqu'au bord externe 9 de la dite paroi de manière à permettre à l'élément longiligne de passer depuis le bord externe jusqu'à la portée 10 du moyen de fixation.

Tel que cela est représenté mais non limitativement pour l'invention, l'élément longiligne a une section transversale circulaire.

Selon une caractéristique de l'invention, d'une part, le dispositif est réalisé dans au moins un matériau 11 élastiquement déformable et, d'autre part, la paroi du dispositif est globalement constituée d'un manchon tubulaire 17 qui, dans un plan transversal médian, porte un disque 18 dont l'épaisseur décroit depuis le niveau du manchon jusqu'à son bord périphérique.

Par exemple, à cet effet, la solution de continuité permet par déformation élastique l'ouverture du dispositif pour son engagement du moyen de fixation.

Cette particularité technique permet donc l'adaptation du dispositif sur tout élément longiligne de section transversale adéquate sans qu'un accès à au moins l'une de ses extrémités soit nécessaire.

Cette adaptation peut donc avoir lieu sans démontage d'élément longiligne.

Dans une forme de réalisation de l'invention, les faces délimitant la solution de continuité sont planes et s'étendent chacune dans un plan tangent à la portée d'appui.

Suivant une autre forme de réalisation, les deux faces délimitant la solution de continuité sont planes et s'étendent chacune dans un plan qui passe sensiblement par l'axe longilitudinal13 de la portée d'appui 1 et donc de l'élément longiligne, les deux faces étant écartées l'une de l'autre d'un angle plus ou moins important.

De préférence, cet angle est sensiblement nul et après montage du dispositif sur l'élément longiligne, on supprime la solution de continuité par collage l'une sur l'autre des deux faces.

Cet angle reste inférieur à 180⁰.

Conformément à l'invention, le dispositif comporte au moins un organe élastique 14 d'application énergique de sa portée complémentaire 10 contre la face externe 8 de l'élément longiligne avec laquelle elle doit coopérer.

Dans une forme préférée de réalisation, l'organe élastique est sensiblement tubulaire et sa face intérieure 10 constitue la portée complémentaire du dispositif tandis que sa face extérieure 15 est enveloppée par le matériau 11 élastiquement déformable qui constitue la paroi portant la surface déviatrice et présente au moins une fente 16 en correspondance avec la solution de continuité 12.

Par exemple, l'organe élastique tubulaire est en résine armée de fibres et le matériau constituant la paroi du dispositif est en silicone moulé autour du dit organe élastique.

Evidemment, lors du montage du dispositif sur un élément, on peut interposer une colle et/ou un matériau d'étanchéité entre la portée complémentaire 10 et la face externe 8 de l'élément avec laquelle elle doit coopérer.

## Revendications

1. Dispositif de déviation vers au moins un point d'égouttement d'un liquide (3) s'écoulant par ruissellement sur un élément longiligne (2) notamment sensiblement cylindrique, lequel dispositif comprend :
- d'une part, au moins un moyen (6) de déviation de l'écoulement, c'est à dire essentiellement une paroi (6) dont, lorsque le dispositif se trouve monté sur un élément, au moins une surface (7) dite déviatrice, borde par une liaison étanche la face externe (8) du dit élément et s'étend jusqu'à un bord externe (9) de la paroi (6) qui est éloigné de la face externe (8) de l'élément de manière à produire la concentration et l'égouttement du liquide et,
- d'autre part, au moins un moyen (10) de fixation de la dite paroi (6) sur l'élément longiligne qui consiste principalement en une portée globalement cylindrique (10) dont la section transversale est de forme complémentaire à celle de la face (8) externe de l'élément longiligne et qui est ménagé dans la paroi (6) qui porte la surface déviatrice (7) et
la paroi (6) qui porte la surface déviatrice (7) et la dite portée (10) du moyen de fixation, présente une solution de continuité (12) qui s'étend depuis la dite portée (10) du moyen de fixation sur la face externe (8) de l'élément jusqu'au bord externe (9) de la dite paroi de manière à permettre à l'élément longiligne de passer depuis le bord externe jusqu'à la portée (10) du moyen de fixation,
ce dispositif étant CARACTERISE en ce que, d'une part, il est réalisé dans au moins un matériau (11) élastiquement déformable et, d'autre part, la paroi du dispositif est globalement constituée d'un manchon tubulaire (17) qui, dans un plan transversal médian, porte un disque (18) dont l'épaisseur décroit depuis le niveau du manchon jusqu'à son bord périphérique.

2. Dispositif selon la revendication 1 caractérisé en ce qu'il comporte au moins un organe élastique (14) d'application énergique de sa portée complémentaire (10) contre la face externe (8) de l'élément longiligne avec laquelle elle doit coopérer.

3. Dispositif selon la revendication 1 ou 2 caractérisé en ce que l'organe élastique est sensiblement tubulaire et sa face intérieure (10) constitue la portée complémentaire du dispositif tandis que sa face extérieure (15) est enveloppée par le matériau (11) élastiquement déformable qui constitue la paroi portant la surface déviatrice et présente au moins une fente (16) en correspondance avec la solution de continuité (12).

4. Dispositif selon l'une quelconque des revendications 1 à 3 caracterisé en ce que les faces délimitant la solution de continuité sont planes et s'étendent chacune dans un plan tangent à la portée-d'appui.

5. Dispositif selon l'une quelconque des revendications 1 à 4 caractérisé en ce que les deux faces délimitant la solution de continuité sont planes et s'étendent chacune dans un plan qui passe sensiblement par l'axe longilitudinal (13) de la portée d'appui (10) et donc de l'élément longiligne, les deux faces étant écartées l'une de l'autre d'un angle plus ou moins important.

6. Dispositif selon la revendication 5 caractérisé en ce que cet angle reste inférieur à 180°.

7. Dispositif selon la revendication 5 caractérisé en ce que cet angle est sensiblement nul et après montage du dispositif sur l'élément longiligne, on supprime la solution de continuité par collage l'une sur l'autre des deux faces.

## Patentansprüche

1. Ablenkvorrichtung zum Ablenken einer auf einem langgestreckten geraden, insbesondere im wesentlichen zylindrischen Element (2) rieselnden Flüssigkeit (3) zu mindestens einem Abtropfpunkt, welche folgendes aufweist:
- einerseits mindestens eine Strömungsablenkeinrichtung (6), d.h. im wesentlichen eine Wandung (6), bei der mindestens eine als Abweisfläche bezeichnete Fläche (7) mit einer dichten Verbindung an die Außenseite (8) eines Elements anschließt, wenn die Vorrichtung auf diesem Element montiert ist, und sich bis zu einem Außenrand (9) der Wandung (6) erstreckt, die von der Außenfläche (8) des Elements so entfernt ist, daß die Konzentration und das Abtropfen der Flüssigkeit herbeiführbar sind, und
- andererseits mindestens eine Einrichtung (10) zum Befestigen der Wandung (6) auf dem langgestreckten geraden Element, die hauptsachlich aus einem im wesentlichen zylindrischen Bereich (10) besteht, dessen Querschnitt komplementär zur Außenfläche (8) des langgestreckten geraden Elements geformt ist und der in der die Abweisfläche (7) tragenden Wandung (6) vorgesehen ist, und bei welcher die die Abweisfläche (7) und den Bereich (10) der Befestigungseinrichtung tragende Wandung (6) eine Unterbrechung (12) aufweist, die sich von dem Bereich (10) der Befestigungseinrichtung auf der Außenseite (8) des Elements bis zum Außenrand (9) der Wandung in der Weise erstreckt, daß das langgestreckte gerade Element vom Außenrand bis zum Bereich (10) der Befestigungseinrichtung durchführbar ist, dadurch GEKENNZEICHNET, daß sei einerseits aus mindestens einem elastisch verformbaren Material (11) hergestellt ist und daß andererseits die Wandung der Vorrichtung im allgemeinen von einer rohrförmigen Hülse (17) gebildet wird, die in einer Mittelrißebene eine Scheibe (18) tragt, deren Dicke von der Höhe der Hülse bis zum Umfangsrand abnimmt.

2. Vorrichtung nach Anspruch 1, dadurch gekennzeichnet, daß sie mindestens ein elastisches Element (14) zum Anlegen ihres komplementären Bereichs (10) unter Kraftaufwand gegen die Außenseite (8) des langgestreckten geraden Elements aufweist, mit welchem sie zusammenwirken soll.

3. Vorrichtung nach Anspruch 1 oder 2, dadurch gekennzeichnet, daß das elastische Element im wesentlichen rohrförmig ist und seine Innenfläche (10) den komplementären Bereich der Vorrichtung bildet, während seine Außenseite (15) von dem elastisch verformbaren Material umschlossen wird, weiches die die Abweisfläche tragende Wandung bildet und mindestens einen sich mit der Unterbrechung (12) deckenden Schlitz (16) aufweist

4. Vorrichtung nach einem der Ansprüche 1 bis 3, dadurch gekennzeichnet, daß die Flächen, welche die Unterbrechung begrenzen, eben sind und sich jeweils in einer zum Auflagebereich tangentialen Ebene erstrecken.

5. Vorrichtung nach einem der Ansprüche 1 bis 4, dadurch gekennzeichnet, daß die beiden Flächen, welche die Unterbrechung begrenzen, eben sind und sich jeweils in einer Ebene erstrecken, die im wesentlichen durch die Längsachse (13) des Auflagebereichs (10) und damit des langgestreckten geraden Elements verläuft, wobei die beiden Flächen um einen mehr oder weniger großen Winkel voneinander beabstandet sind.

6. Vorrichtung nach Anspruch 5, dadurch gekennzeichnet, daß dieser Winkel kleiner als 180° bleibt.

7. Vorrichtung nach Anspruch 5, dadurch gekennzeichnet, daß die ser Winkel im wesentlichen Null ist und nach Montage der Vorrichtung auf dem langgestreckten geraden Element die Unterbrechung durch Aufeinanderkleben der beiden Flächen neutralisiert wird.

## Claims

1. A device for deflecting, towards at least one dripping point, a liquid (3) running along a longitudinal, in particular substantially cylindrical element (2), the said device comprising:
- firstly, at least one means (6) for deflecting the flow, i.e. essentially a wall (6) of which at least one deflecting surface (7), when the device is mounted on an element, borders the exterior (8) of the said element via a sealed joint and extends as far as an outside edge (9) of the wall (6) which is at a distance from the exterior (8) of the element so as to result in concentration and dripping of the liquid, and
- secondly, at least one means (10) for fixing the said wall (6) to the longitudinal element, the said means mainly comprising an entirely cylindrical bearing surface (10), the cross-section of which is of a form complementary to that of the exterior (8) of the longitudinal element and which is arranged in the wall (6) which carries the deflecting surface (7), and
- the wall (6) which carries the deflecting surface (7) and the said bearing surface (10) of the fixing means have a gap (12) which extends from the said bearing surface (10) of the fixing means on the exterior (8) of the element as far as the outside edge (9) of the said wall so as to enable the longitudinal element to pass from the outside edge to the bearing surface (10) of the fixing means, this device being characterised in that firstly it is made of at least one elastically deformable material (11), and secondly the wall of the device is formed entirely from a tubular sleeve (17) which, in a central transverse plane, carries a disc (18), the thickness of which decreases from the line of the sleeve to its peripheral edge.

2. A device according to claim 1, characterised in that it comprises at least one resilient member (14) for forcibly pressing its complementary bearing surface (10) against the exterior (8) of the longitudinal element with which it has to co-operate.

3. A device according to claim 1 or 2, characterised in that the resilient member is substantially tubular and its interior surface (10) forms the complementary bearing surface of the device, while its exterior surface (15) is covered by the elastically deformable material (11) which forms the wall carrying the deflecting surface and has at least one slit (16) communicating with the gap (12).

4. A device according to any one of claims 1 to 3, characterised in that the surfaces delimiting the gap are flat and each extend in a plane tangential to the bearing surface.

5. A device according to any one of claims 1 to 4, characterised in that the two surfaces delimiting the gap are flat and each extend in a plane which substantially extends along the longitudinal axis (13) of the bearing surface (10) and therefore of the longitudinal element, the two surfaces being spaced apart at an angle of varying size.

6. A device according to claim 5, characterised in that this angle remains less than 180°.

7. A device according to claim 5, characterised in that this angle is substantially zero and, after the device has been mounted on the longitudinal element, the gap is removed by gluing one of the two surfaces to the other.
